# FASCICULE DE BREVET EUROPEEN

(11) **EP 3 238 454 B1**
(45) Date de publication et mention de la délivrance du brevet: **22.06.2022**
(21) Numéro de dépôt: 15832812.0
(22) Date de dépôt: 21.12.2015
(51) Int. Cl.: H04N 21/2362, H04N 21/431, H04N 21/2365

(54) **GÉNÉRATION D'UNE MOSAÏQUE DE VIDÉOS**
ERZEUGUNG EINES VIDEOMOSAIKS
GENERATION OF A VIDEO MOSAIC

(30) Priorité: 23.12.2014 FR 1463190
(43) Date de publication de la demande: 01.11.2017
(73) Titulaire: ORANGE, 92130 Issy-les-Moulineaux (FR)
(72) Inventeur: KERVADEC, Sylvain, 35490 Sens de Bretagne (FR); DAVENET, Stéphane, 35520 Melesse (FR)
(74) Mandataire: Plasseraud IP
(86) Numéro de dépôt international: PCT/FR2015/053694
(87) Numéro de publication internationale: WO 2016/102870

(56) Documents cités:
- FR-A1- 2 872 988
- US-A1- 2009 067 507
- US-B1- 6 931 660

## Description

L'invention concerne les mosaïques de vidéos. L'invention porte en particulier sur la génération d'un flux vidéo représentatif d'une mosaïque de vidéos.

De manière connue, de telles mosaïques de vidéos sont fournies par un flux vidéo qui, une fois décodé, donne lieu à l'affichage d'une pluralité de vidéos occupant chacune une région de l'image visualisable.

Afin de générer de tels flux vidéos, il est par exemple connu de récupérer les signaux audiovisuels associés à un ensemble de chaînes que l'on souhaite assembler en mosaïque, de les sous-échantillonner et de les regrouper dans une seule vidéo. Cette vidéo est ensuite encodée à la manière d'une chaîne classique.

Une autre manière de procéder consiste à générer une mosaïque à partir de flux vidéo respectivement décodés par différentes instances de décodage vidéo et à composer les chaînes ainsi décodées en une mosaïque dans une page Internet de navigateur.

EP-A-2872988 et US-B-6931660 décrivent chacun la création d'un flux vidéo représentant une mosaïque générée à partir d'une pluralité de flux vidéo.

Ces manières de procéder comportent des inconvénients.

En effet, dans le premier cas de figure, la définition et la répartition des chaînes composant une mosaïque est statique et ne peut faire l'objet d'une sélection par un utilisateur. En outre, les mosaïques ainsi formées doivent également être diffusées en tant que chaînes à part entière, ce qui diminue d'autant la bande passante pour d'autres flux vidéo.

Dans le deuxième cas de figure, la mosaïque requiert autant d'instances de décodage vidéo que la mosaïque comporte de chaînes affichées. Les ressources requises pour le traitement de telles mosaïques est donc très important, et rend ce type de mosaïques inadapté pour certains équipements à faible puissance de calcul.

L'invention vient améliorer la situation.

A cet effet, l'invention concerne un procédé, tel qu'énoncé à la revendication indépendante 1, de génération d'un premier flux vidéo représentatif d'une mosaïque de vidéos, dit vidéo mosaïque, à partir d'un ensemble d'au moins deux deuxièmes flux vidéo composés chacun d'une vidéo associée à des données d'en-tête et à des données vidéo encodées représentatives d'images.

En particulier, au cours du procédé:
- les données vidéo encodées représentatives d'images de chacune des vidéos de l'ensemble des deuxièmes flux vidéo sont conservées lors de la génération du premier flux vidéo,
- un en-tête associé à ladite vidéo mosaïque est généré, ledit en-tête étant représentatif d'un assemblage des données vidéos encodées représentatives d'images de chacune des vidéos de l'ensemble des deuxièmes flux vidéo, et comprenant :
   - des premières données d'en-tête qui sont héritées des données d'en-tête de chacune des vidéos de l'ensemble des deuxièmes flux vidéo,
   - des deuxièmes données d'en-tête qui sont générées indépendamment des données d'en-tête de chacune des vidéos de l'ensemble des deuxièmes flux vidéo.

Le procédé selon l'invention permet de générer des mosaïques de manière souple, et plus particulièrement à partir d'une sélection de chaînes opérée par un utilisateur. En outre, il ne requiert pas la transmission du flux vidéo en tant que chaîne à part entière. Enfin, il fournit un flux vidéo dont le décodage en vue de l'affichage de la mosaïque requiert une faible puissance de calcul. Au cours du procédé selon l'invention, pour chaque flux vidéo d'un ensemble de flux vidéo, on construit des informations de signalisation représentatives du fait que ledit flux vidéo est adapté pour être utilisé en tant que deuxième flux vidéo et on associe audit flux vidéo les informations de signalisation, on reçoit les informations de signalisation des flux vidéo dudit ensemble et on choisit les deuxièmes flux vidéo parmi ledit ensemble de flux vidéo.

Ceci a pour effet de faciliter la sélection des deuxièmes flux vidéo à partir desquels le premier flux vidéo est à composer.

Selon un autre aspect de l'invention, la vidéo mosaïque générée est de résolution supérieure à la résolution de chacune des vidéos de l'ensemble des deuxièmes flux vidéo.

Selon un autre aspect de l'invention, la vidéo mosaïque est générée à partir d'une structure en tuiles, où les données vidéo encodées représentatives d'images associées à chaque tuile de la vidéo mosaïque correspondent respectivement aux données vidéo encodées représentatives d'images associées à chaque vidéo de l'ensemble des deuxièmes flux vidéo.

Ceci a pour effet de simplifier la génération du premier flux vidéo dans le cadre où les deuxièmes flux vidéo obéissent à la norme MPEG-H HEVC/ H.265.

Selon un autre aspect de l'invention, pour au moins l'un des deuxièmes flux vidéo, on obtient ledit deuxième flux vidéo à partir d'un troisième flux vidéo représentatif d'une mosaïque de vidéos, ledit deuxième flux vidéo étant représentatif de l'une des vidéos de ladite mosaïque de vidéos du troisième flux vidéo.

Le procédé permet ainsi la génération d'une mosaïque de vidéos à partir de vidéos elles-mêmes issues d'une mosaïque de vidéos. En conséquence, la richesse des configurations possibles des chaînes utilisées pour former le premier flux vidéo est augmentée.

Selon un autre aspect de l'invention, pour au moins un deuxième flux vidéo obtenu à partir d'un troisième flux vidéo, les données vidéo encodées dudit deuxième flux sont indépendantes en termes de prédiction des données vidéo fournissant les autres vidéos de la mosaïque de vidéos dont ledit troisième flux est représentatif.

Ceci a pour effet de faciliter la construction des deuxièmes flux vidéo à partir des troisièmes flux vidéo.

Selon un autre aspect de l'invention, on obtient les deuxièmes flux vidéo à partir d'une sélection par un utilisateur d'au moins une chaîne télévisuelle correspondant à un ou plusieurs des deuxièmes flux vidéo.

Ceci a pour effet que le contenu des vidéos que la mosaïque vise à rendre visualisable est d'une plus grande souplesse de configuration.

L'invention concerne également un programme informatique comportant des instructions pour la mise en œuvre du procédé tel que défini ci-dessus, lorsque ce programme est exécuté par un processeur

L'invention concerne en outre un support de stockage non-transitoire d'un programme exécutable par ordinateur, comprenant un ensemble de données représentant un ou plusieurs programmes, lesdits un ou plusieurs programmes comprenant des instructions pour, lors de l'exécution desdits un ou plusieurs programmes par un ordinateur comprenant une unité de traitement couplée de manière opérationnelle à des moyens mémoire et à un module de réception de flux vidéo, conduire l'ordinateur à générer un flux vidéo représentatif d'une mosaïque de vidéos selon le procédé tel que défini ci-dessus.

Par ailleurs, l'invention concerne un terminal défini par la revendication indépendante 8.

L'invention sera mieux comprise à la lecture de la description détaillée qui va suivre, donnée uniquement à titre d'exemple et faite en référence aux Figures annexées, sur lesquelles :
- La Figure 1 est une illustration schématique d'un support de stockage et d'un terminal selon l'invention ;
- Les Figures 2a et 2b sont des illustrations schématiques de données d'un flux vidéo généré dans le cadre de l'invention et de données de flux vidéo utilisés pour générer le flux vidéo ;
- La Figure 3 est une illustration schématique d'un exemple de procédé selon l'invention, pouvant représenter l'algorithme général d'un programme informatique au sens de l'invention ;
- La Figure 4 illustre un découpage d'une image d'un flux vidéo en groupes de tranches ;
- La Figure 5 est une illustration schématique, selon l'invention, d'un ensemble de flux vidéo utilisé dans le procédé de la Figure 3 ; et
- La Figure 6 est une illustration schématique d'un flux vidéo généré dans le cadre de l'invention selon une variante du procédé de la Figure 3.

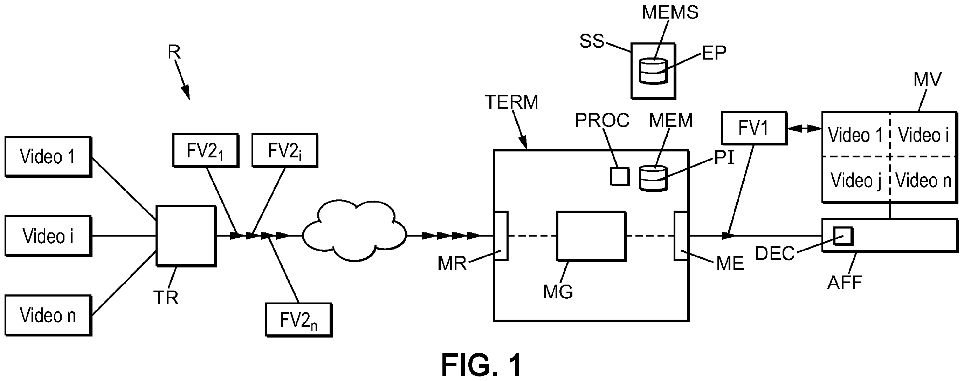

La Figure 1 illustre un terminal TERM selon l'invention.

Le terminal TERM est adapté pour générer un premier flux vidéo FV1 représentatif d'une mosaïque de vidéos MV, ci-après vidéo mosaïque MV. De manière connue, lors de son affichage, une telle vidéo mosaïque se présente sous la forme d'une vidéo découpée en régions au sein de chacune desquelles une vidéo donnée est visualisable. La vidéo est par exemple découpée en deux régions ou plus de deux régions.

Les différentes vidéos composant la mosaïque vidéo peuvent être identiques ou différentes, c'est-à-dire représenter des scènes identiques ou différentes, les images respectives des différentes vidéos composant la mosaïque étant alors identiques, respectivement différentes. Par exemple, les vidéos sont différentes deux à deux, c'est-à-dire que les images d'une des régions de la mosaïque sont différentes des images concomitantes des autres régions de la mosaïque.

Le premier flux vidéo FV1 est plus particulièrement généré à partir de deuxièmes flux vidéo notés FV2₁,.., FV2ᵢ, ..., FV2ₙ, et désignés de manière générique par la référence FV2. Chacun de ces flux vidéo FV2 est représentatif d'une vidéo (video 1, video i, video n sur la Figure 1).

Le premier flux vidéo FV1 et les deuxièmes flux vidéo FV2 correspondent chacun à un ensemble de données numériques représentatives d'images formant les vidéos correspondantes. Les images d'un flux vidéo sont par exemple organisées en séquences d'images, c'est-à-dire en groupes d'images composant la vidéo correspondante.

Ces flux vidéo obéissent par exemple à un ensemble de normes, tel que par exemple à l'ensemble de normes DVB pour « Digital Video Broadcasting », qui signifie diffusion vidéo numérique, à des normes du MPEG, pour « Moving Picture Expert Group », qui signifie groupe d'experts en films, etc.

Dans le contexte de l'invention, le terme de «flux vidéo » ne signifie pas que les données numériques de ce flux sont uniquement considérées dans un état dans lequel elles circulent entre deux équipements, comme par exemple sur un réseau raccordant un terminal de réception de flux vidéo et un serveur. Dans le contexte de l'invention, le terme de «flux vidéo» est à comprendre comme ensemble de données numériques représentatives d'une vidéo, et ce indépendamment du fait que ces données soient en circulation entre deux tels équipements. En d'autres termes, la notion de « flux vidéo » englobe également les données numériques se trouvant dans un dispositif de stockage numérique tel qu'une mémoire ou un espace de stockage sur un serveur informatique.

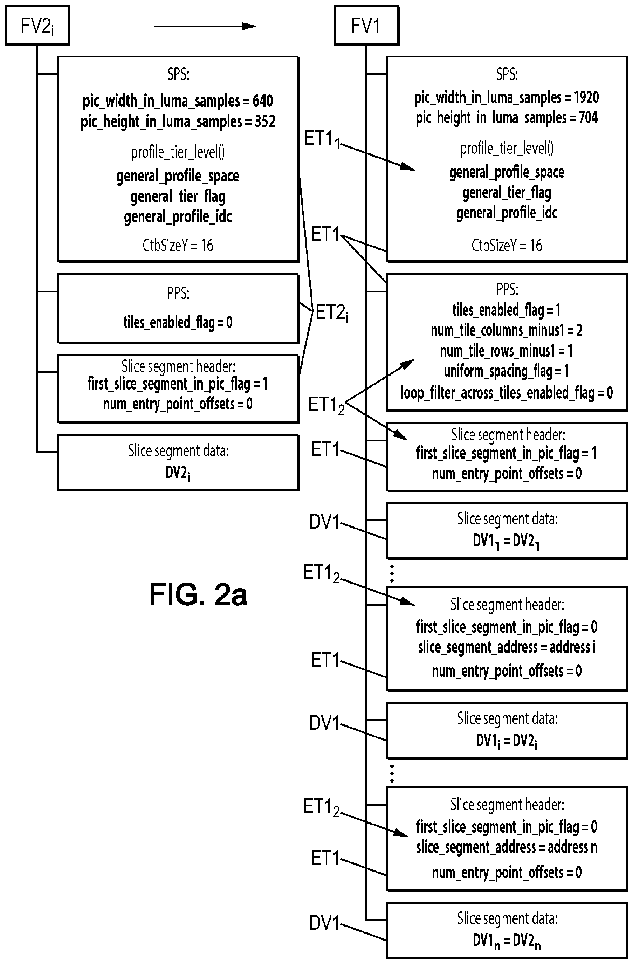

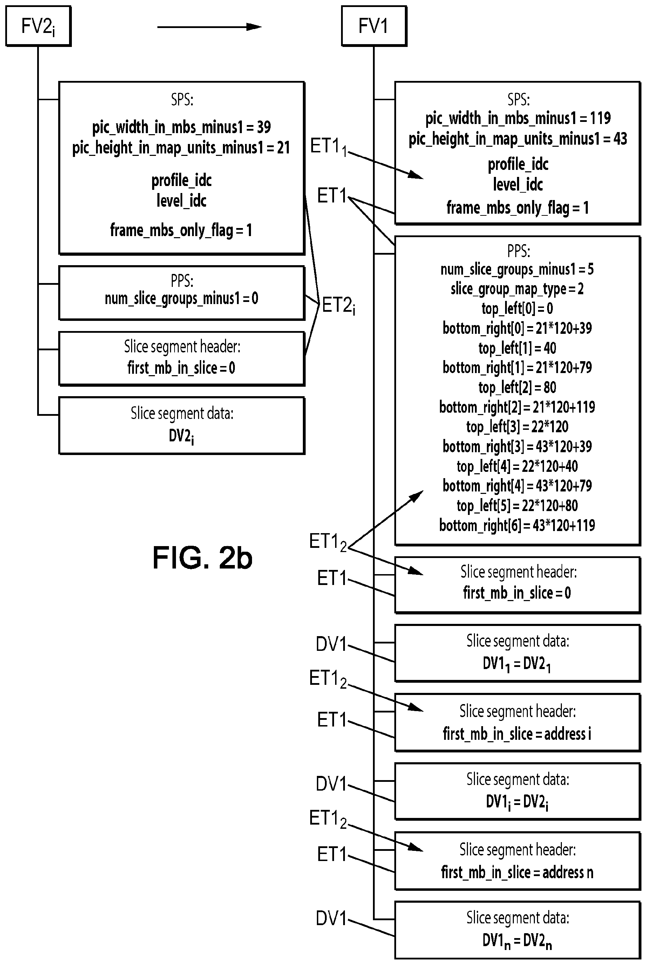

En référence aux Figures 2a et 2b, les premier et deuxièmes flux vidéo FV1, FV2 comprennent des données d'en-tête notées ET1 pour le premier flux FV1 et notées ET2ᵢ pour le deuxième flux vidéo FV2ᵢ, et des données vidéos encodées notées DV1 pour le premier flux vidéo et notées DV2ᵢ pour le deuxième flux vidéo FV2ᵢ.

Les données d'en-tête sont représentatives de la configuration de la vidéo correspondante. Les données d'en-tête sont en particulier représentatives de la configuration d'encodage des données vidéo encodées du flux vidéo considéré.

Les données d'en-tête comprennent un ou plusieurs ensemble(s) de paramètres et, pour chaque paramètre, une valeur du paramètre associé.

Plus précisément, les données d'en-tête des premier et deuxièmes flux vidéo FV1, FV2 comprennent des paramètres de séquence (« Sequence Parameters Set» en anglais, d'acronyme SPS). Ces paramètres de séquence comprennent notamment des paramètres de résolution et des paramètres de profil et niveau indiquant respectivement l'ensemble des outils de codage autorisés potentiellement activés, et le niveau de complexité de décodage du flux. Un ensemble de paramètres de séquence est par exemple associé à chaque séquence d'image.

Les données d'en-tête des premier et deuxièmes flux vidéo FV1, FV2 comprennent également des paramètres d'image (« Picture Parameters Set » en anglais, d'acronyme PPS). Ces paramètres d'images comprennent un paramètre d'activation d'une structuration de l'image correspondante en régions telles que les groupes de tranches (« slice groups ») dans la norme MPEG-4 AVC/H.264, ou en tuiles (« tiles ») dans la norme MPEG-H HEVC / H.265. Ces structurations en tuiles et groupes de tranches sont décrites ci-après.

Les données d'en-tête des premier et deuxièmes flux vidéo FV1, FV2 comprennent en outre des paramètres de segment de tranche (« Slice segment header » en anglais), les tranches correspondant également à un objet utilisé pour structurer les données vidéo encodées de chaque image. Cette structuration en tranches est décrite ci-après

Dans l'exemple de la Figure 2a qui illustre les données des deuxièmes flux vidéo FV2 dont les données vidéos sont encodées dans le format MPEG-H HEVC/ H.265, les paramètres de résolution des deuxièmes flux vidéo FV2 comprennent les paramètres «*pic_width_in_luma_samples*» et *«pic_height_in_luma_samples* », et les paramètres de profil/niveau comprennent les paramètres *« general_profil_space », « general_tier_flag* » et « *general_profile_idc* ». En outre, les paramètres PPS comprennent le paramètre d'activation d'une structuration de l'image correspondante en tuiles « *tiles_enabled_flag* ». Les paramètres de segment de tranches comprennent le paramètre « *first_slice_segment_in_pic_flag* » représentatif du fait que le segment de tranche correspondant est ou non le premier de l'image. Optionnellement, les paramètres de segment de tranche comprennent le paramètre « *num_entry_point_offsets ».*

Dans l'exemple de la Figure 2b, qui illustre les données des deuxièmes flux vidéo FV2 dont les données vidéo DV2ᵢ sont encodées dans le format MPEG-4 AVC / H.264, les paramètres de résolution des deuxièmes flux vidéo FV2 comprennent les paramètres « *pic_width_in_mbs_minus1 »* et « *pic_height_in_map_units_minus1* », et les paramètres de profil/niveau comprennent les paramètres « *profile_idc* » et « *level_idc* ». Les paramètres SPS comprennent également un paramètre « *frame_mbs_only_flag* » qui indique que le flux vidéo ne contient que des macroblocs encodés selon un mode progressif, et ne contient pas de macroblocs encodés selon un mode entrelacé. Une valeur de ce paramètre égale à un signifie que les unités utilisées pour composer les groupes de tranches sont les macroblocs, ce qui facilite le calcul de champs de positionnement (« top_left » et « bottom_right ») des groupes de tranches. Dans le cas où le contenu encodé est susceptible d'utiliser des outils de codage entrelacé, les unités formant les groupes de tranches sont des paires de macroblocs. En outre, le paramètre d'activation d'une structuration de l'image correspondante en groupes de tranches est indiqué par la valeur du paramètre « *num_slice_groups_minus1* ». Les paramètres de tranches comprennent le paramètre « *first_mb_in_slice* » adapté pour renseigner la valeur du premier macro-bloc de la tranche associée.

Les données d'en-tête ET1 du premier flux vidéo FV1 sont décrites plus en détail ci-après.

Les données vidéo encodées sont représentatives des images de la vidéo correspondante. Ces données sont encodées selon une norme particulière, telle que par exemple la norme MPEG-4 AVC / H.264, la norme MPEG-H HEVC / H.265, la norme MPEG-2, etc.

Chaque image de la vidéo correspondante est encodée dans les données vidéo encodées sous la forme d'unités de codage couvrant chacune une région de l'image correspondante. Ces unités de codage sont par exemple connues sous le nom de « Macroblocks » (macroblocs en français) dans le format MPEG-4 AVC/H.264, ou encore sous le nom de « Coding Tree Units » (CTU) dans le format MPEG-H HEVC / H.265.

Le découpage d'une image en unités de codage peut présenter une structure particulière parmi un ensemble de structures possibles prévues par la norme correspondante. Autrement dit, les unités de codage d'une image peuvent elles-mêmes être regroupées au sein de structures plus vastes, le recours à ces structures permettant par exemple d'affiner la configuration de l'encodage et/ou du décodage des images pour en améliorer les performances, ou d'optimiser le flux vidéo pour un mécanisme de transport ou de protection aux erreurs spécifiques.

Par exemple, le format MPEG-H HEVC / H.265 prévoit que les unités de codage peuvent être regroupées en tranches de données connues sous le nom anglophone de « slices ». Chaque tranche correspond à une région de l'image et peut posséder des propriétés, par exemple de dépendance temporelle en matière de prédiction vis-à-vis d'autres images de la vidéo, différentes de celles des autres tranches de la même image. Ces tranches peuvent elles-mêmes être structurées en segments de tranches (« Slice Segments » en anglais). Une tranche est composée d'un premier segment de tranche indépendant, suivi d'un ensemble de segments de tranche dépendants. Un seul en-tête de tranche est présent par tranche (fournie par l'entête du segment de tranche indépendant), utilisée comme référence par l'ensemble des segments de cette tranche. Des entêtes de segment de tranche sont également présents, de taille très réduite par rapport à l'entête de tranche. Chaque segment de tranche est encapsulé dans une unité de transport séparée (connue sous le nom anglophone de « NAL Unit » (Unité NAL), pour « Network Abstraction Layer Unit ») permettant d'adapter la taille de ces unités de transport en fonction du mécanisme de transport choisi.

Cette granularité permet donc de contrôler la taille des unités de transport, en réduisant le coût des entêtes, puisque les informations de l'entête de tranche ne sont fournies qu'une seule fois.

Le format MPEG-H HEVC / H.265 prévoit également que les unités de codage peuvent être regroupées en tuiles connues sous le nom anglophone de «tiles» formant chacune une région rectangulaire de l'image. Les tuiles d'une image forment des régions rectangulaires spatialement et/ou temporellement indépendantes les unes des autres en termes de codage.

Les tranches contiennent un nombre entier d'unités de codage CTU agencées consécutivement selon l'ordre de parcours de l'image (« scan order »), et ne permettent pas de définir de manière souple des zones rectangulaires dans l'image autrement que dans le cas où les frontières de la tranche correspondent aux bords de l'image (les rectangles définis font donc nécessairement la largeur de l'image).

En outre, comme indiqué précédemment, le format MPEG-4 AVC/H.264 prévoit le découpage des images en groupes de tranches (« slice groups » en anglais).

Les groupes de tranches correspondent à un partitionnement de l'image en différents groupes, chaque groupe pouvant contenir une ou plusieurs tranches. Différents types de partitionnement sont définis, permettant par exemple de partitionner l'image sous une forme de damier, ou de définir plusieurs zones rectangulaires dans l'image.

Dans le contexte de l'invention, préférentiellement, les deuxièmes flux vidéo FV2 utilisés pour générer le premier flux vidéo FV1 présentent des propriétés communes.

En particulier, préférentiellement, les deuxièmes flux vidéo FV2 reposent sur la même norme (MPEG-4 AVC/H.264, MPEG-H HEVC / H.265, etc.).

En outre, de préférence, les deuxièmes flux vidéo FV2 sont adaptés pour que l'assemblage de leurs images forme un rectangle.

Par ailleurs, préférentiellement, les configurations de codage des différents deuxièmes flux vidéo FV2 sont compatibles entre elles. Avantageusement, ces configurations de codage sont identiques entre elles. Ces configurations de codage incluent notamment les outils de codage activés et les options de codage employées. Les configurations de codage incluent en particulier le nombre d'images de référence utilisées pour encoder les données vidéo des deuxièmes flux vidéo FV2. Dans le cadre de la norme MPEG-H HEVC / H.265, ces configurations de codage incluent par exemple l'usage ou non des fonctions connues associées aux paramètres «*amp_enabled_flag*» et « *sample_adaptive_offset_enabled_flag* » des SPS et PPS. Dans le cadre de la norme MPEG-4 AVC/H.264, ces configurations de codage incluent par exemple les fonctions associées aux paramètres « *frame_mbs_only_flag* » et « *direct_8×8_inference_flag* ».

De même, préférentiellement, le séquencement et l'ordonnancement des images des deuxièmes flux vidéo FV2 sont compatibles. Ceci correspond à l'ordre dans lequel les images sont codées et au type de prédiction utilisé pour chaque image ou pour chaque tranche (slice) composant ces images. De manière connue, parmi les types de prédiction, on distingue le type de prédiction I pour Intra, dans lequel l'image (ou la tranche) est codée sans référence à une autre image, le type de prédiction P dans lequel l'image (ou la tranche) est codée en référence à une image précédemment codée, et le type B dans lequel l'image (ou la tranche) est codée en référence à la fois à une image précédemment codée et une image future. En outre, de préférence, les images dites IDR, pour « Instantaneous Decoder Refresh » sont préférentiellement alignées temporellement entre les deuxièmes flux vidéo FV2. De manière connue, ces images IDR marquent le début d'une séquence dont les images ne dépendent (lorsqu'elles en dépendent) que d'images appartenant à la séquence en question. Cet alignement est configuré lors de l'encodage des vidéos 1 à i pour former les deuxièmes flux vidéo FV2.

En référence à la Figure 1, le terminal TERM comprend un module de réception MR adapté pour connecter le terminal TERM à un réseau R via lequel les deuxièmes flux vidéo FV2 sont transmis au terminal. Comme indiqué précédemment, chaque deuxième flux vidéo FV2 est représentatif d'une vidéo. Ses données d'en-tête et ses données vidéo encodées sont construites de manière connue à partir de la vidéo correspondante. Cette construction est mise en œuvre par un équipement du réseau R, tel que par exemple une tête de réseau TR.

Le terminal TERM comprend en outre un module de génération MG configuré pour la génération du premier flux vidéo FV1 et un module d'émission ME adapté pour délivrer le premier flux vidéo FV1. Par ailleurs, le terminal TERM comprend un processeur PROC et une mémoire MEM pour le stockage de programmes informatiques permettant le fonctionnement du terminal TERM lors de leur exécution par le processeur PROC. La mémoire MEM comprend en particulier un programme informatique PI contenant des instructions dont l'exécution par le processeur PROC se traduit par la génération par le module de génération MG du premier flux vidéo comme décrit ci-après.

La Figure 1 illustre en outre un support de stockage SS comprenant une mémoire de stockage MEMS contenant un ensemble de programmes EP contenant des instructions pour, lors de l'exécution des programmes par un ordinateur comprenant une unité de traitement couplée de manière opérationnelle à des moyens mémoire et à un module de réception de flux vidéo, conduire l'ordinateur à générer le premier flux vidéo par le procédé décrit ci-après. L'ensemble de programmes correspond par exemple au programme informatique PI ou encore à un programme dont l'exécution par un processeur tel que le processeur PROC se traduit par l'installation du programme PI dans une mémoire de stockage de données numériques telle que la mémoire MEM.

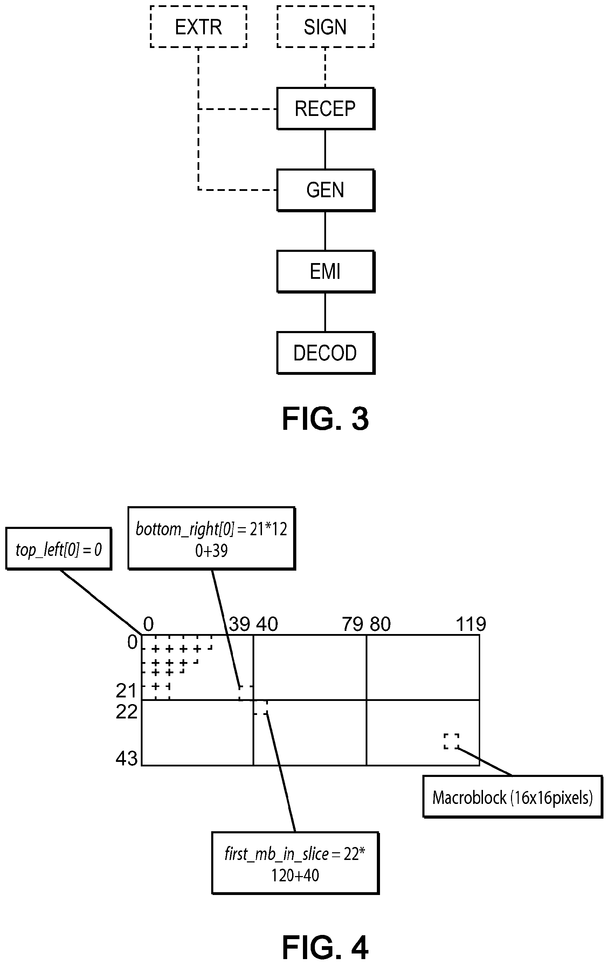

La Figure 3 est un diagramme illustrant le procédé selon l'invention pour la génération du premier flux vidéo FV1. Comme décrit précédemment, cette génération est réalisée à partir de deuxièmes flux vidéo FV2.

Lors d'une étape RECEP, le terminal TERM reçoit les deuxièmes flux vidéo FV2 au niveau de son module de réception MR. Ce module de réception est connecté au réseau R via lequel les deuxièmes flux vidéo FV2 sont acheminés. Cette étape se déroule par exemple de manière continue, les données des deuxièmes flux vidéo FV2 arrivant de manière continue au niveau du module de réception MR.

Lors d'une étape de génération GEN, le premier flux vidéo FV1 est généré à partir des deuxièmes flux vidéo FV2 par le module de génération MG.

Lors de cette étape, les deuxièmes flux vidéo FV2 sont analysés. Cette analyse fournit les données d'en-tête ET2ᵢ et les données vidéos encodées DV2ᵢ de chacun des deuxièmes flux vidéos. Cette analyse est menée par tout moyen connu, par exemple par un ou plusieurs parseurs.

Le module de génération MG génère alors les données d'en-tête ET1 du premier flux vidéo FV1 à partir des données d'en-tête ET2ᵢ des deuxièmes flux vidéo FV2 et génère les données vidéo encodées DV1 du premier flux vidéo FV1 à partir des données vidéo encodées DV2ᵢ des deuxièmes flux vidéos FV2.

Les données d'en-tête ET1 générées sont représentatives de l'assemblage, au sein des images du premier flux vidéo FV1, des images des deuxièmes flux vidéo FV2. Les données d'en-tête ET1 comprennent des premières données d'en-tête ET1₁ et des deuxièmes données d'en-tête ET1₂.

Les premières données d'en-tête ET1₁ sont générées par le module de génération MG de telle sorte que ces premières données d'en-tête ET1 soient héritées des données d'en-tête ET2ᵢ de chacun des deuxièmes flux vidéo FV2.

En d'autres termes, les paramètres des premières données d'en-tête ET1₁ générés par le module de génération MG correspondent aux paramètres présents dans les données d'en-tête ET2ᵢ des deuxièmes flux vidéos, et sont générés précisément car ils sont présents au sein des données d'en-tête ET2ᵢ.

Les premières données d'en-tête ET1₁ comprennent notamment les paramètres de séquence SPS relatifs à la résolution des images du premier flux vidéo FV1, au profil et au niveau de la séquence considérée. Dans l'exemple de la Figure 2a (MPEG-H HEVC / H.265), les paramètres de séquence SPS que comprennent les premières données d'en-tête peuvent en outre comprendre un ou plusieurs des paramètres suivants: « *amp_enabled_flag », « pcm_enabled_flag »* « *scaling_list_enabled_flag* », *« sample_adaptive_offset_enabled_flag », «sps_temporal*_*mvp*_*enabled_flag* »,et « *strong_intra_smoothing_enabled_flag* ».

Par ailleurs, les premières données d'en-tête ET1₁ comprennent des paramètres d'image (PPS) associés à la configuration de codage des images du premier flux vidéo, à l'exception des paramètres relatifs à la structuration des images en tuiles (MPEG-H HEVC / H.265) et en groupes de tranches (MPEG-4 AVC/H.264). Dans l'exemple de la Figure 2a (MPEG-H HEVC / H.265), les paramètres d'image PPS des premières données d'en-tête comprennent en outre un ou plusieurs des paramètres suivants :
« *sign_data_hiding_enabled_flag », weighted_pred_flag* »,« *cabac_init_present_flag », «pps_slice _chroma_qp_offsets_present_flag* »,« *weighted_bipred_flag »,* « *transquant_bypass_enabled_flag* ».

Dans l'exemple de la Figure 2b (MPEG-4 AVC/H.264), les paramètres de séquence SPS que comprennent les premières données d'en-tête comprennent les paramètres de résolution et les paramètres de niveau et de profil. Ils peuvent en outre comprendre un ou plusieurs des paramètres suivants :«*frame_mbs_only_flag* »,« *direct_8×8_inference_flag* »,
« *gaps_in_frame_num_value_allowed_flag* ». En outre, les paramètres d'image PPS des premières données d'en-tête peuvent comprendre un ou plusieurs des paramètres suivants : « *entropy_coding_mode_flag* », « *weighted_pred_flag », «constrained_intra_pred_flag».*

Avantageusement, les paramètres des premières données d'en-tête ET1₁ ont des valeurs respectives prises égales aux valeurs de ces paramètres au sein des données d'en-tête ET2ᵢ des deuxièmes flux vidéo FV2, à l'exception des paramètres de résolution.

En particulier, la valeur des paramètres de résolution du premier flux vidéo FV1 est prise supérieure à la valeur des paramètres des deuxièmes flux vidéo FV2. En d'autres termes, la résolution des images du premier flux vidéo FV1 est prise supérieure à la résolution des images des deuxièmes flux vidéo FV2. La vidéo mosaïque MV a ainsi une résolution supérieure à la résolution des vidéos dont les deuxièmes flux vidéo FV2 sont représentatifs.

Dans l'exemple de la Figure 2a, les paramètres de résolution des deuxièmes flux vidéo FV2 ont pour valeurs respectives 640 pixels (largeur) et 352 pixels (hauteur), ces valeurs étant respectivement 1920 et 704 pour le premier flux vidéo FV1. Dans l'exemple de la Figure 2b, ces paramètres ont pour valeur 39 et 21 pour les deuxièmes flux vidéo FV2, et 119 et 43 pour le premier flux vidéo FV1 (exprimés en macroblocs).

Le premier flux vidéo FV1 contient des informations de configuration des listes de référence, qui correspondent de manière connue à une caractérisation des images utilisées comme référence pour le codage prédictif des donnes vidéo encodées du premier flux vidéo FV1. Ces informations de configuration des listes de référence sont générées à partir d'informations correspondantes que comprennent les deuxièmes flux vidéo FV2. Aussi, avantageusement, ces informations de configuration des listes de référence pour le premier flux vidéo FV1 sont prises identiques aux informations de configuration des deuxièmes flux vidéo FV2. Ces informations de configuration des listes de référence sont par exemple distribuées entre les paramètres de séquence SPS et les paramètres d'image PPS.

Dans le cadre de la norme MPEG-H HEVC / H.265, ces informations de configuration comprennent par exemple les paramètres suivants :
- « *num_short_term_ref-pic_sets* »,
- « *long_term_ref_pics_present_flag* »,
- « *num_ref_idx_l0_default_active_minus1* », et
- « *num_ref_idx_l1_default_active_minus1 ».*

Dans le cadre de la norme MPEG-4 AVC/H.264, ces informations de configuration comprennent par exemple les paramètres suivants :
- « max_num_ref_frames »,
- « num_ref_idx_l0_default_active_minus1 », et
- « num_ref_idx_l1_defaut_active_minus1 ».

Les deuxièmes données d'en-tête ET1₂ comprennent des paramètres générés indépendamment des paramètres présents au sein des données d'en-tête ET2ᵢ. En d'autres termes, les paramètres de deuxièmes données d'en-tête ET1₂ sont générés par le module de génération MG quels que soient les paramètres des données d'en-tête ET2ᵢ et quelles que soient les valeurs correspondantes.

Ces paramètres des deuxièmes données d'en-tête ET1₂ comprennent en particulier des paramètres et des valeurs correspondantes configurés pour définir, pour chaque image des données vidéo encodées DV1 du premier flux vidéo FV1, une structure en une pluralité de régions.

Préférentiellement, pour des données vidéos encodées DV2ᵢ des deuxièmes flux vidéo FV2 obéissant au format MPEG-H HEVC / H.265, les paramètres des deuxièmes données d'en-tête ET1₂ comprennent un paramètre de déclaration de la structure de chaque image du premier flux vidéo FV1 en tuiles, et des paramètres précisant la configuration de la structure en tuiles de chaque image. Dans l'exemple de la Figure 2a, les deuxièmes données d'en-tête ET1₂ comprennent ainsi le paramètre de déclaration de la structure en tuiles « *tiles_enabled_flag »* dont la valeur vaut un, et les paramètres « *num_tiles_columns_minus1* », « *num_tiles_rows_minus1* » et « *uniform_spacing_flag »* respectivement associés au nombre de colonnes de tuiles de l'image correspondante, au nombre de lignes de tuiles de cette image et à une information de découpage uniforme de l'image (c'est-à-dire associée au fait que les lignes sont de même hauteur et les colonnes de même largeur). Les valeurs associées à ces trois paramètres sont par exemple prises égales à 2, 1 et 1, ce qui définit un découpage de l'image correspondante (ou d'une séquence d'images) du premier flux vidéo FV1 à 6 tuiles organisées en trois colonnes et deux lignes. Compte tenu du fait que les vidéos encodées formant le premier flux vidéo sont à priori indépendantes entre elles, les différentes vidéos composant la mosaïque sont a fortiori indépendantes, notamment temporellement.

En référence à la Figure 2b, les deuxièmes données d'en-tête ET1₂ comprennent le paramètre de déclaration de la structure en groupes de tranches « *num_slice_groups_minus1* » dont la valeur vaut 5, ce que définit 6 groupes de tranches au sein de l'image correspondante. Les deuxièmes données d'en-tête ET1₂ comprennent en outre, pour chacun de ces groupes, deux paramètres définissant l'espace occupé par le groupe en question. Ces paramètres sont « *top_left[i]* » et « *bottom_right[i] »,* où i désigne le groupe correspondant. Les valeurs de ces paramètres correspondent chacune au numéro d'un macrobloc correspondant. Dans l'exemple de la Figure 2b, les deuxièmes données d'en-tête ET1₂ comprennent en outre un paramètre de type de découpage en groupes de tranches *« slice_group_map_type* ». En effet, de manière connue, ce mécanisme de découpage en groupes de tranches (connu sous le nom anglophone de « Flexible Macroblock Order » et d'acronyme FMO) présente un type parmi plusieurs possibles. Ces types sont les suivants :
- entrelacé (valeur de paramètre 0),
- dispersé (valeur de paramètre 1),
- un découpage présentant plusieurs slice groups de premier plan (« foreground »), et un slice groupe de fond/restant (« leftover ») (valeur de paramètre 2)
- un type dit « box-out » (valeur de paramètre 3),
- un type dit « raster scan » (valeur de paramètre 4),
- un type dit « wipe » (valeur de paramètre 5), et
- un type explicite dans lequel une information explicite d'association à un groupe de tranches est fournie pour chaque macrobloc (valeur de paramètre 6).

Préférentiellement, la valeur du paramètre « *slice_group_map_type* » est prise égale à 2 ou 6. En effet, les types correspondants permettent de définir de manière optimale un partitionnement des images en plusieurs blocs rectangulaires adjacents.

Une fois construites, les données d'en-tête ET1 du premier flux vidéo FV1 définissent ainsi la structure de chaque image du premier flux vidéo FV1, et en particulier définissent un découpage de chaque image du premier flux vidéo en régions distinctes (tuiles en MPEG-H HEVC / H.265et groupes de tranches en MPEG-4 AVC/H.264) adaptées pour former un assemblage des images des deuxièmes flux vidéo FV2.

A noter que les images des deuxièmes flux vidéo FV2 peuvent également présenter un découpage en régions via le mécanisme de tuiles (en MPEG-H HEVC / H.265) ou en groupes de tranches (en MPEG-4 AVC/H.264). En d'autres termes, les données d'en-tête ET2ᵢ peuvent également comprendre le paramètre « *tiles_enabled_flag* » dont la valeur vaut un et les paramètres de description de la configuration de ce découpage, ou le paramètre « *num_slice_groups_minus1* » dont la valeur définit un découpage de l'image en régions plus petites que l'image elle-même et les paramètres de description de la configuration de découpage correspondante.

La Figure 4 illustre le découpage obtenu par les paramètres illustrés sur la Figure 2b. A noter que pour les Figures 2a et 2b, l'entier n, qui représente le nombre de deuxièmes flux vidéo FV2 à partir desquels le premier flux vidéo FV1 est obtenu, a pour valeur 6.

Les deuxièmes données d'en-tête ET1₂ comprennent en outre, pour chaque région de chaque image ainsi définie, des données d'en-tête de tranche (« slice segment header ») associées à la région en question. Ces données d'en-tête ont notamment pour fonction de localiser chaque région au sein de l'image considérée.

Dans l'exemple de la Figure 2a, ces données d'en-tête de tranche comprennent une déclaration de ce que la région est la première région de l'image (paramètre «*first_slice_sigment_in_pic_flag* »), ce paramètre valant 1 pour la première région de l'image et 0 dans le cas contraire. Pour les autres régions, les données d'en-tête correspondantes comprennent un paramètre « *slice_segment_address »* indiquant l'adresse dans l'image de la région associée. La valeur de ce paramètre est notée de manière générique *addressi* pour la région i de l'image considérée. Par exemple, cette adresse correspond à un décalage spatial par rapport à une origine de l'image. Par exemple, dans l'exemple de la Figure 2a, les unités CTU sont configurées pour avoir une dimension 16^{∗}16 pixels (via le paramètre CtbSizeY dont la valeur est 16). Dans cette configuration, la deuxième région de l'image a pour valeur de paramètre « *slice_segment_address* » 880, la troisième pour valeur de ce paramètre 1760, etc. Dans l'exemple de la Figure 2b, les données d'en-tête de tranche comprennent un paramètre «*first_mb_in_slice* » d'identification du premier macrobloc du groupe de tranches correspondant. Dans cet exemple où les unités de carte de groupes de tranches (les « slice_group_map_unit ») sont des macroblocs (car la valeur de « *frame_mbs_only_flag* » vaut « 1 »), la valeur de ce paramètre est prise égale à la valeur du paramètre « *topleft[i]* » de la région correspondante.

Lors de l'étape GEN, les données vidéos encodées DV1 sont construites par le module de génération MG à partir des données vidéos encodées DV2ᵢ des deuxièmes flux vidéo FV2. Les données vidéos encodées DV1 comprennent, pour chaque image, des données vidéos associées à chaque région définie par les données d'en-tête ET1. Ces données vidéos associées à une région i donnée d'une image sont notées DV1ᵢ.

Lors de l'étape GEN, pour chaque région de chaque image du premier flux FV1, le module de génération MG fait correspondre les données vidéo DV1ᵢ de la région considérée à des données vidéo encodées DV2ᵢ de l'un des deuxièmes flux vidéo FV2.

Plus précisément, comme illustré sur les Figures 2a et 2b, pour chaque région de chaque image du premier flux vidéo FV1, les données vidéo encodées DV1ᵢ construites pour une région donnée sont prises identiques aux données vidéo d'une image d'un deuxième flux vidéo FV2.

Lors de cette construction des données vidéos du premier flux vidéo FV1, les données vidéo encodées DV2ᵢ demeurent encodées et ne sont décodées à aucun moment. En d'autres termes, elles sont allouées aux régions des images du premier flux vidéo sans subir de décodage. Elles sont par ailleurs conservées et ne subissent pas de modification.

A l'issue de cette étape, le premier flux vidéo FV1 est construit. Il est alors représentatif d'une mosaïque des vidéos des deuxièmes flux vidéo FV2, c'est-à-dire que chaque image du flux vidéo FV1 est représentative des images des deuxièmes flux vidéo FV2 dont les images correspondent chacune à une région d'une image du premier flux vidéo FV1.

A l'issue de cette étape GEN, lors d'une étape EMI, le premier flux vidéo FV1 est délivré par le module d'émission ME du terminal TERM.

Le premier flux vidéo FV1 est par exemple fourni à un dispositif de décodage et d'affichage AFF tel que représenté à la Figure 1.

Lors d'une étape DECOD représentée à la Figure 3, le premier flux vidéo FV1 est décodé. Ce décodage est par exemple réalisé par un module de décodage DEC du dispositif AFF. Une fois le premier flux vidéo FV1 décodé, la mosaïque vidéo VM est restituée par le dispositif d'affichage AFF. La mosaïque de vidéos issue du premier flux vidéo FV1 se présente alors sous la forme d'une vidéo découpée en régions du dispositif d'affichage AFF, les images vidéo correspondant à chacun des deuxièmes flux vidéo FV2 étant visualisable au sein de l'une de ces régions.

Préférentiellement, lors de l'étape GEN, les deuxièmes flux vidéo FV2 utilisés pour construire le premier flux vidéo FV1 résultent d'une sélection par un utilisateur d'au moins une chaîne télévisuelle correspondant à un ou plusieurs deuxièmes flux vidéo FV2. Cette sélection est par exemple réalisée via une interface homme-machine configurée pour la sélection d'une chaîne télévisuelle affichée sur le dispositif AFF.

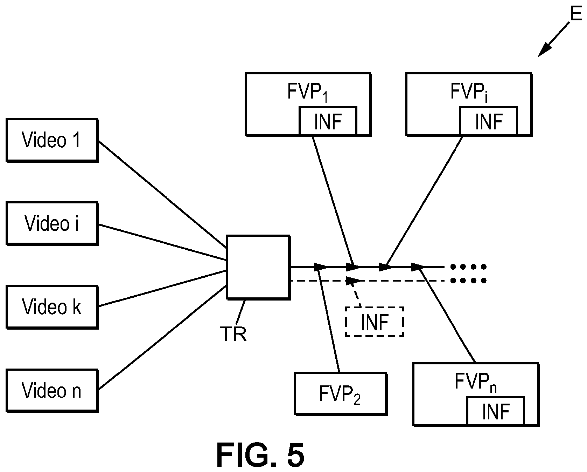

En outre, en référence à la Figure 5, les flux vidéo utilisés en tant que deuxièmes flux vidéo FV2 pour construire le premier flux vidéo FV1 comprennent chacun des informations de signalisation INF représentatives du fait que le flux vidéo correspondant est adapté pour être utilisé en tant que deuxième flux vidéo FV2.

Plus spécifiquement, ces informations de signalisation INF sont représentatives du fait que les flux vidéo signalés partagent un paramétrage identique ou compatible. Cela inclut en particulier :
- les outils de codage activés, et renseignés dans les données d'entête (SPS, PPS dans le cas de MPEG-4 AVC/H.264 ou MPEG-H HEVC/H.265)
- le séquencement des différents types images (I, P, B), avec un alignement temporel complet ou partiel des images dites « points d'accès aléatoire » permettant le démarrage du décodage. Cela inclut en particulier les images dites IDR (pour « Instantaneous Decoder Refresh ») décrites dans MPEG-4 AVC/H.264 ou MPEG-H HEVC/H.265 ,
- le nombre et l'ordre des images de référence utilisées pour prédiction temporelle,
- la résolution de codage.

Par « paramétrages compatibles », par exemple pour un premier et un deuxième paramétrage respectivement associés à l'un de deux flux vidéo, on entend qu'on peut créer un troisième paramétrage déterminé à partir des premier et deuxièmes paramétrages et au sein duquel les données des deux flux vidéo sont effectivement manipulables sans générer d'erreurs. En d'autres termes, aucun des premier et deuxième paramétrages ne comprend de paramètre dont la valeur rend impossible la manipulation effective des données correspondantes au sein d'un troisième paramétrage prévu pour le traitement des données des deux flux vidéo en raison d'un conflit avec la valeur d'un paramètre de l'autre paramétrage.

Aussi, lors d'une étape SIGN antérieure à l'étape RECEP, on construit un ensemble E de flux vidéo à chacun desquels les informations de signalisation INF sont associées. En pratique, cette association est réalisable sous la forme d'un ajout des informations de signalisation INF au flux vidéo correspondant. Alternativement, cette association se fait par déclaration, par exemple dans un fichier indépendant des flux vidéo, de ce que les flux vidéo sont adaptés pour être utilisables en tant que deuxièmes flux vidéo. Cette alternative est illustrée sur la Figure 5 par un bloc INF (en pointillés) représentatif de l'émission des informations de signalisation INF indépendamment des flux vidéo considérés. En outre, ces flux vidéo ainsi signalisés sont notés FVP₁, FVPᵢ, FVPₙ sur la Figure 5. En outre, la signalisation de ces informations est symbolisée par un cadre au sein du flux vidéo associé et dans lequel la mention INF figure.

Lors de l'étape de génération GEN et préalablement à la génération du flux vidéo FV1, on sélectionne les deuxièmes flux vidéo FV2 parmi l'ensemble E de flux vidéo FVP₁, FVPᵢ, FVPₙ auxquels sont associées les informations de signalisation INF.

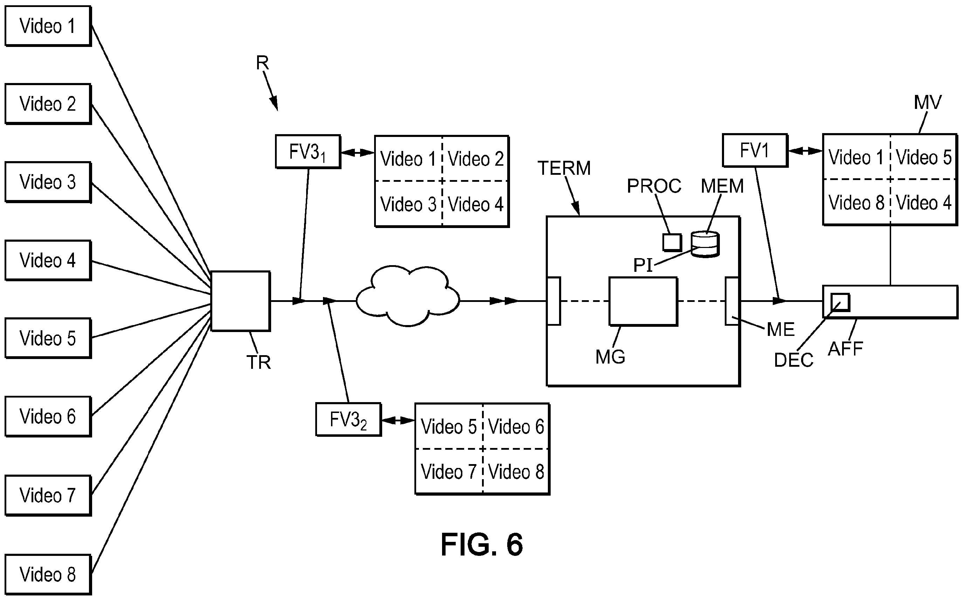

En référence à la Figure 6, en variante, au moins l'un des deuxièmes flux vidéo FV2 est obtenu à partir d'un troisième flux vidéo FV3 représentatif lui-même d'une mosaïque de vidéos. Les autres deuxièmes flux vidéo FV2 sont obtenus comme décrit précédemment, ou sont également obtenus à partir d'un flux vidéo représentatif d'une mosaïque de vidéos. La Figure 6 illustre un mode de réalisation dans lequel les deuxièmes flux vidéo FV2 sont tous obtenus à partir de deux troisièmes flux vidéo FV3₁ et FV3₂.

Préférentiellement, dans cette variante, le ou les troisièmes flux vidéo FV3 obéissent à la norme MPEG-H HEVC / H.265et présentent des données reposant sur une structuration en tuiles pour chaque image, cette structuration étant décrite ci-dessus.

Ceci a pour effet de faciliter la construction des deuxièmes flux vidéo FV2 à partir des troisièmes flux vidéo FV3.

En outre, préférentiellement, les données vidéo encodées du flux vidéo extrait du troisième flux vidéo FV3 pour former un deuxième flux vidéo FV2 sont indépendantes en termes de prédiction des autres vidéos formant le troisième flux vidéo FV3 en question. Cette indépendance est par exemple déclarée par l'intermédiaire d'un message SEI. Ces messages SEI correspondent à une entité NAL précisément connue sous le nom de SEI (pour « Supplemental Enhancement Information », qui signifie information d'amélioration supplémentaire). En l'occurrence le message utilisé pour déclarer cette indépendance est connu sous le nom de « temporal motion-constrained tilesets SEI message », pour message temporel SEI d'ensemble de tuiles contraint en mouvement)

Ceci facilite plus avant l'obtention du deuxième flux vidéo FV2 à partir du troisième flux vidéo FV3.

Dans le cadre de ce mode de réalisation, lors d'une étape EXTR du procédé tel que représenté sur la

Figure 3, chaque deuxième flux vidéo FV2 à construire à partir d'un troisième flux vidéo FV3 est effectivement construit. Pour ce faire, on récupère les données vidéo encodées correspondantes dans le troisième flux vidéo FV3 et qui forment alors les données vidéo encodées DV2ᵢ, et on génère ses données d'en-tête ET2ᵢ à partir des données d'en-tête du troisième flux vidéo FV3 correspondant.

Cette étape EXTR intervient par exemple entre l'étape de réception RECEP et l'étape de génération GEN. Alternativement, cette étape intervient préalablement à l'étape de réception RECEP. Dans ce cas de figure, la construction des deuxièmes flux vidéo FV2 est mise en œuvre par un équipement autre que le terminal TERM, tel que par exemple une tête de réseau. Cette variante permet de limiter la quantité de données à faire transiter via le réseau jusqu'au terminal TERM.

Avantageusement, le (ou les) troisième flux vidéo FV3 utilisé pour obtenir les deuxièmes flux vidéo FV2 est lui-même obtenu par le procédé selon l'invention décrit ci-dessus.

D'autres modes de réalisation sont envisageables.

En particulier, dans la description ci-dessus, la génération du premier flux vidéo FV1 a été décrite comme mise en œuvre par le terminal TERM de réception de flux vidéo. Toutefois, ce procédé peut être mis en œuvre par un équipement quelconque du réseau R, le premier flux vidéo FV1 en tant que tel étant alors acheminé via le réseau R jusqu'au terminal TERM. Par exemple, le procédé est mis en œuvre par un des équipements du groupe formé par : un serveur de contenu, une plateforme de services, une tête de réseau, une passerelle domestique.

## Revendications

1. Procédé de génération d'un premier flux vidéo (FV1) représentatif d'une mosaïque de vidéos (MV), dit vidéo mosaïque, à partir d'un ensemble d'au moins deux deuxièmes flux vidéo (FV2) composés chacun d'une vidéo associée à des données d'en-tête (ET2ᵢ) et à des données vidéo encodées (DV2ᵢ) représentatives d'images, dans lequel :
- les données vidéo encodées (DV2₁, DV2ᵢ, DV2ₙ) représentatives d'images de chacune des vidéos de l'ensemble de deuxièmes flux vidéo (FV2) sont conservées lors de la génération du premier flux vidéo (FV1),
- un en-tête (ET1) associé à ladite vidéo mosaïque (MV) est généré, ledit en-tête (ET1) étant représentatif d'un assemblage des données vidéos encodées (DV2₁, DV2ᵢ, DV2ₙ) représentatives d'images de chacune des vidéos de l'ensemble de deuxièmes flux vidéo (FV2), et comprenant :
- des premières données d'en-tête (ET1₁) correspondant aux données d'en-tête (ET2₁, ET2ᵢ, ET2ₙ) de chacune des vidéos de l'ensemble des deuxièmes flux vidéo (FV2, FV2₁, FV2ᵢ, FV2ₙ),
- des deuxièmes données d'en-tête (ET1₂) qui sont générées indépendamment des données d'en-tête (ET2₁, ET2ᵢ, ET2ₙ) de chacune des vidéos de l'ensemble des deuxièmes flux vidéo (FV2), et dans lequel la vidéo mosaïque (MV) est générée à partir d'une structure en tuiles, où les données vidéo encodées (DV1₁, DV1ᵢ, DV1ₙ) représentatives d'images associées à chaque tuile de la vidéo mosaïque (MV) correspondent respectivement aux données vidéo encodées (DV2₁, DV2ᵢ, DV2ₙ) représentatives d'images associées à chaque vidéo de l'ensemble des deuxièmes flux vidéo (FV2) ;
dans lequel, pour chaque flux vidéo (FVP1, FVPi, FVPn) d'un ensemble (E) de flux vidéo, on construit des informations de signalisation (INF) relatives à des paramétrages associés audit flux vidéo, les informations de signalisation d'une pluralité de flux vidéo parmi les flux vidéo de l'ensemble permettant de déterminer si les paramétrages associés aux flux vidéo de la pluralité de flux vidéo sont identiques ou compatibles pour que les flux vidéo de la pluralité de flux vidéo soient utilisés en tant que deuxième flux vidéo (FV2) et on associe à chaque flux vidéo de l'ensemble les informations de signalisation (INF), et dans lequel on reçoit les informations de signalisation (INF) des flux vidéo dudit ensemble et on choisit les deuxièmes flux vidéo (FV2) parmi ledit ensemble (E) de flux vidéo en fonction des informations de signalisation (INF).

2. Procédé selon la revendication 1, dans lequel la vidéo mosaïque (MV) générée est de résolution supérieure à la résolution de chacune des vidéos de l'ensemble des deuxièmes flux vidéo (FV2).

3. Procédé selon l'une quelconque des revendications précédentes, dans lequel, pour au moins l'un des deuxièmes flux vidéo (FV2), on obtient ledit deuxième flux vidéo (FV2) à partir d'un troisième flux vidéo (FV3, FV3₁, FV3₂) représentatif d'une mosaïque de vidéos, ledit deuxième flux vidéo étant représentatif de l'une des vidéos de ladite mosaïque de vidéos du troisième flux vidéo (FV3, FV3₁, FV3₂).

4. Procédé selon la revendication 3, dans lequel, pour au moins un deuxième flux vidéo (FV2) obtenu à partir d'un troisième flux vidéo (FV3, FV3₁, FV3₂), les données vidéo encodées (DV2ᵢ) dudit deuxième flux sont indépendantes en termes de prédiction des données vidéo encodées fournissant les autres vidéos de la mosaïque de vidéos dont ledit troisième flux vidéo (FV3, FV3₁, FV3₂) est représentatif.

5. Procédé selon l'une quelconque des revendications précédentes, dans lequel on obtient les deuxièmes flux vidéo (FV2) à partir d'une sélection par un utilisateur d'au moins une chaîne télévisuelle correspondant à un ou plusieurs des deuxièmes flux vidéo (FV2).

6. Programme informatique comportant des instructions pour la mise en œuvre du procédé selon l'une des revendications précédentes, lorsque ce programme est exécuté par un processeur.

7. Support de stockage non-transitoire d'un programme exécutable par ordinateur, comprenant un ensemble de données représentant un ou plusieurs programmes, lesdits un ou plusieurs programmes comprenant des instructions pour, lors de l'exécution desdits un ou plusieurs programmes par un ordinateur comprenant une unité de traitement couplée de manière opérationnelle à des moyens mémoire et à un module de réception de flux vidéo, conduire l'ordinateur à générer un premier flux vidéo représentatif d'une mosaïque de vidéos selon le procédé de l'une quelconque des revendications 1 à 5.

8. Terminal comprenant des moyens de génération (MG) d'un premier flux vidéo représentatif d'une mosaïque de vidéos (MV), dit vidéo mosaïque, à partir d'un ensemble de deuxièmes flux vidéo (FV2, FV2₁, FV2ᵢ, FV2ₙ) composés chacun d'une vidéo associée à des données d'en-tête (ET2ᵢ) et à des données vidéo encodées (DV2ᵢ) représentatives d'images, dans lequel, pour chaque flux vidéo (FVP1, FVPi, FVPn) d'un ensemble (E) de flux vidéo des informations de signalisation (INF) relatives à des paramétrages sont associés, les informations de signalisation d'une pluralité de flux vidéo parmi les flux vidéo de l'ensemble permettant de déterminer si les paramétrages associés aux flux vidéo de la pluralité de flux vidéo sont identiques ou compatibles pour que les flux vidéo de la pluralité de flux vidéo soient utilisés en tant que deuxième flux vidéo (FV2), dans lequel les moyens de génération (MG) sont configurés pour :
- recevoir les informations de signalisation (INF) des flux vidéo dudit ensemble,
- sélectionner les deuxièmes flux vidéo (FV2, FV2₁, FV2ᵢ, FV2ₙ) parmi ledit ensemble (E) de flux vidéo en fonction des informations de signalisation (INF),
- conserver les données vidéo encodées (DV2₁, DV2ᵢ, DV2ₙ) représentatives d'images de chacune des vidéos de l'ensemble de deuxièmes flux vidéo (FV2) lors de la génération du premier flux vidéo (FV1),
- générer un en-tête (ET1) associé à ladite vidéo mosaïque (MV), ledit en-tête étant représentatif d'un assemblage des données vidéos encodées (DV2₁, DV2ᵢ, DV2ₙ) représentatives d'images de chacune des vidéos de l'ensemble des deuxièmes flux vidéo (FV2, FV2₁, FV2ᵢ, FV2ₙ), et comprenant :
- des premières données d'en-tête (ET1₁) correspondant aux données d'en-tête (ET2₁, ET2ᵢ, ET2ₙ) de chacune des vidéos de l'ensemble des deuxièmes flux vidéo (FV2, FV2₁, FV2ᵢ, FV2ₙ),
- des deuxièmes données d'en-tête (ET1₂) qui sont générées indépendamment des données d'en-tête (ET2₁, ET2ᵢ, ET2ₙ) de chacune des vidéos de l'ensemble des deuxièmes flux vidéo (FV2, FV2₁, FV2ᵢ, FV2ₙ),
la vidéo mosaïque (MV) étant générée à partir d'une structure en tuiles, où les données vidéo encodées (DV1₁, DV1ᵢ, DV1ₙ) représentatives d'images associées à chaque tuile de la vidéo mosaïque (MV) correspondent respectivement aux données vidéo encodées (DV2₁, DV2ᵢ, DV2ₙ) représentatives d'images associées à chaque vidéo de l'ensemble des deuxièmes flux vidéo (FV2).

## Patentansprüche

1. Verfahren zur Generierung eines ersten Videostroms (FV1), der für ein Mosaikvideo genanntes Mosaik von Videos (MV) repräsentativ ist, ausgehend von einer Gruppe von mindestens zwei zweiten Videoströmen (FV2) bestehend je aus einem Video, das Kopfzeilendaten (ET2ᵢ) und für Bilder repräsentativen codierten Videodaten (DV2ᵢ) zugeordnet ist, wobei:
- die für Bilder jedes der Videos der Gruppe von zweiten Videoströmen (FV2) repräsentativen codierten Videodaten (DV2₁, DV2ᵢ, DV2ₙ) bei der Generierung des ersten Videostroms (FV1) beibehalten werden,
- eine dem Mosaikvideo (MV) zugeordnete Kopfzeile (ET1) generiert wird, wobei die Kopfzeile (ET1) für eine Zusammenfügung der für Bilder jedes der Videos der Gruppe von zweiten Videoströmen (FV2) repräsentativen codierten Videodaten (DV2₁, DV2ᵢ, DV2ₙ) repräsentativ ist und enthält:
- erste Kopfzeilendaten (ET1₁) entsprechend den Kopfzeilendaten (ET2₁, ET2ᵢ, ET2ₙ) jedes der Videos der Gruppe der zweiten Videoströme (FV2, FV2₁, FV2ᵢ, FV2ₙ),
- zweite Kopfzeilendaten (ET1₂), die unabhängig von den Kopfzeilendaten (ET2₁, ET2ᵢ, ET2ₙ) jedes der Videos der Gruppe der zweiten Videoströme (FV2) generiert werden, und wobei das Mosaikvideo (MV) ausgehend von einer kachelförmigen Struktur generiert wird, wobei die codierten Videodaten (DV1₁, DV1ᵢ, DV1ₙ), die für jeder Kachel des Mosaikvideos (MV) zugeordnete Bilder repräsentativ sind, je den codierten Videodaten (DV2₁, DV2ᵢ, DV2ₙ) entsprechen, die für jedem Video der Gruppe der zweiten Videoströme (FV2) zugeordnete Bilder repräsentativ sind;
wobei Signalisierungsinformationen (INF) bezüglich von dem Videostrom zugeordneten Parametrierungen für jeden Videostrom (FVP1, FVPi, FVPn) einer Gruppe (E) von Videoströmen konstruiert werden, wobei die Signalisierungsinformationen einer Vielzahl von Videoströmen unter den Videoströmen der Gruppe es ermöglichen, zu bestimmen, ob die den Videoströmen der Vielzahl von Videoströmen zugeordneten Parametrierungen gleich oder kompatibel sind, damit die Videoströme der Vielzahl von Videoströmen als zweiter Videostrom (FV2) verwendet werden, und jedem Videostrom der Gruppe die Signalisierungsinformationen (INF) zugeordnet werden, und wobei die Signalisierungsinformationen (INF) der Videoströme der Gruppe empfangen werden, und die zweiten Videoströme (FV2) aus der Gruppe (E) von Videoströmen abhängig von den Signalisierungsinformationen (INF) ausgewählt werden.

2. Verfahren nach Anspruch 1, wobei das generierte Mosaikvideo (MV) eine höhere Auflösung hat als die Auflösung jedes der Videos der Gruppe der zweiten Videoströme (FV2).

3. Verfahren nach einem der vorhergehenden Ansprüche, wobei, für mindestens einen der zweiten Videoströme (FV2), der zweite Videostrom (FV2) ausgehend von einem dritten Videostrom (FV3, FV3₁, FV3₂) erhalten wird, der für ein Mosaik von Videos repräsentativ ist, wobei der zweite Videostrom für eines der Videos des Mosaiks von Videos des dritten Videostroms (FV3, FV3₁, FV3₂) repräsentativ ist.

4. Verfahren nach Anspruch 3, wobei für mindestens einen ausgehend von einem dritten Videostrom (FV3, FV3₁, FV3₂) erhaltenen zweiten Videostrom (FV2) die codierten Videodaten (DV2ᵢ) des zweiten Stroms bezüglich der Vorhersage der codierten Videodaten unabhängig sind, die die anderen Videos des Mosaiks von Videos liefern, für die der dritte Videostrom (FV3, FV3₁, FV3₂) repräsentativ ist.

5. Verfahren nach einem der vorhergehenden Ansprüche, wobei die zweiten Videoströme (FV2) ausgehend von einer Wahl durch einen Benutzer mindestens eines Fernsehkanals erhalten werden, der einem oder mehreren der zweiten Videoströme (FV2) entspricht.

6. Computerprogramm, das Anweisungen zur Durchführung des Verfahrens nach einem der vorhergehenden Ansprüche aufweist, wenn dieses Programm von einem Prozessor ausgeführt wird.

7. Nichtflüchtiger Speicherträger eines von einem Computer ausführbaren Programms, der eine Gruppe von Daten enthält, die ein oder mehrere Programme darstellen, wobei die ein oder mehrere Programme Anweisungen enthalten, um bei der Ausführung des einen oder der mehreren Programme durch einen Computer, der eine Verarbeitungseinheit enthält, die operativ mit Speichereinrichtungen und mit einem Videostrom-Empfangsmodul gekoppelt ist, den Computer zu veranlassen, einen ersten Videostrom zu generieren, der für ein Mosaik von Videos gemäß dem Verfahren eines der Ansprüche 1 bis 5 repräsentativ ist.

8. Endgerät, das Generierungseinrichtungen (MG) eines für ein Mosaikvideo genanntes Mosaik von Videos (MV) repräsentativen ersten Videostroms ausgehend von einer Gruppe von zweiten Videoströmen (FV2, FV2₁, FV2ᵢ, FV2ₙ) enthält, die je aus einem Kopfzeilendaten (ET2ᵢ) und für Bilder repräsentativen codierten Videodaten (DV2ᵢ) zugeordneten Video bestehen, wobei für jeden Videostrom (FVP1, FVPi, FVPn) einer Gruppe (E) von Videoströmen Signalisierungsinformationen (INF) bezüglich Parametrierungen zugeordnet sind, wobei die Signalisierungsinformationen einer Vielzahl von Videoströmen unter den Videoströmen der Gruppe es erlauben zu bestimmen, ob die den Videoströmen der Vielzahl von Videoströmen zugeordneten Parametrierungen gleich oder kompatibel sind, damit die Videoströme der Vielzahl von Videoströmen als zweiter Videostrom (FV2) verwendet werden, wobei die Generierungseinrichtungen (MG) konfiguriert sind:
- die Signalisierungsinformationen (INF) der Videoströme der Gruppe zu empfangen,
- die zweiten Videoströme (FV2, FV2₁, FV2ᵢ, FV2ₙ) aus der Gruppe (E) von Videoströmen abhängig von den Signalisierungsinformationen (INF) auszuwählen,
- die für Bilder jedes der Videos der Gruppe von zweiten Videoströmen (FV2) repräsentativen codierten Videodaten (DV2₁, DV2ᵢ, DV2ₙ) bei der Generierung des ersten Videostroms (FV1) beizubehalten,
- eine dem Mosaikvideo (MV) zugeordnete Kopfzeile (ET1) zu generieren, wobei die Kopfzeile für eine Zusammenfügung der für Bilder jedes der Videos der Gruppe der zweiten Videoströme (FV2, FV2₁, FV2ᵢ, FV2ₙ) repräsentativen codierten Videodaten (DV2₁, DV2ᵢ, DV2ₙ) repräsentativ ist, und die enthält:
- erste Kopfzeilendaten (ET1₁), die den Kopfzeilendaten (ET2₁, ET2ᵢ, ET2ₙ) jedes der Videos der Gruppe der zweiten Videoströme (FV2, FV2₁, FV2ᵢ, FV2ₙ) entsprechen,
- zweite Kopfzeilendaten (ET1₂), die unabhängig von den Kopfzeilendaten (ET2₁, ET2ᵢ, ET2ₙ) jedes der Videos der Gruppe der zweiten Videoströme (FV2, FV2₁, FV2ᵢ, FV2ₙ) generiert werden,
wobei das Mosaikvideo (MV) ausgehend von einer kachelförmigen Struktur generiert wird, wobei die für jeder Kachel des Mosaikvideos (MV) zugeordnete Bilder repräsentativen codierten Videodaten (DV1₁, DV1ᵢ, DV1ₙ) je den für jedem Video der Gruppe der zweiten Videoströme (FV2) zugeordnete Bilder repräsentativen codierten Videodaten (DV2₁, DV2ᵢ, DV2ₙ) entsprechen.

## Claims

1. Method for generating a first video stream (FV1) representative of a video mosaic (MV), called mosaic video, from a set of at least two second video streams (FV2) each formed of a video associated with header data (ET2ᵢ) and with encoded video data (DV2ᵢ) representative of images, wherein:
- the encoded video data (DV2₁, DV2ᵢ, DV2ₙ) representative of images of each of the videos of the set of second video streams (FV2) are retained when generating the first video stream (FV1),
- a header (ET1) associated with said mosaic video (MV) is generated, said header (ET1) being representative of an assembly of encoded video data (DV2₁, DV2ᵢ, DV2ₙ) representative of images of each of the videos of the set of second video streams (FV2), and comprising:
- first header data (ET1₁) corresponding to the header data (ET2₁, ET2ᵢ, ET2ₙ) of each of the videos of the set of second video streams (FV2, FV2₁, FV2ᵢ, FV2ₙ),
- second header data (ET1₂) that are generated independently of the header data (ET2₁, ET2ᵢ, ET2ₙ) of each of the videos of the set of second video streams (FV2), and wherein the mosaic video (MV) is generated from a tiled structure, in which the encoded video data (DV1₁, DV1ᵢ, DV1ₙ) representative of images associated with each tile of the mosaic video (MV) correspond, respectively, to the encoded video data (DV2₁, DV2ᵢ, DV2ₙ) representative of images associated with each video of the set of second video streams (FV2);
wherein, for each video stream (FVP1, FVPi, FVPn) of a set (E) of video streams, signalling information (INF) relating to settings associated with said video stream is constructed, the signalling information for a plurality of video streams from among the video streams of the set making it possible to determine whether the settings associated with the video streams of the plurality of video streams are identical or compatible in order for the video streams of the plurality of video streams to be used as second video stream (FV2), and the signalling information (INF) is associated with each video stream of the set, and wherein the signalling information (INF) for the video streams of said set is received and the second video streams (FV2) are chosen from among said set (E) of video streams on the basis of the signalling information (INF).

2. Method according to Claim 1, wherein the mosaic video (MV) that is generated has a resolution higher than the resolution of each of the videos of the set of second video streams (FV2).

3. Method according to either one of the preceding claims, wherein, for at least one of the second video streams (FV2), said second video stream (FV2) is obtained from a third video stream (FV3, FV3₁, FV3₂) representative of a video mosaic, said second video stream being representative of one of the videos of said video mosaic of the third video stream (FV3, FV3₁, FV3₂).

4. Method according to Claim 3, wherein, for at least one second video stream (FV2) obtained from a third video stream (FV3, FV3₁, FV3₂), the encoded video data (DV2ᵢ) of said second stream are independent in terms of predicting the encoded video data supplied to the other videos of the video mosaic of which said third video stream (FV3, FV3₁, FV3₂) is representative.

5. Method according to any one of the preceding claims, wherein the second video streams (FV2) are obtained from a user selection of at least one television channel corresponding to one or more of the second video streams (FV2).

6. Computer program comprising instructions for implementing the method according to one of the preceding claims when this program is executed by a processor.

7. Non-transitory storage medium for a computer-executable program, comprising a dataset representing one or more programs, said one or more programs comprising instructions for prompting a computer, when said one or more programs are executed by a computer comprising a processing unit operationally coupled to memory means and to a video stream reception module, to generate a first video stream representative of a video mosaic according to the method of any one of Claims 1 to 5.

8. Terminal comprising generation means (MG) for generating a first video stream representative of a video mosaic (MV), called mosaic video, from a set of second video streams (FV2, FV2₁, FV2ᵢ, FV2ₙ) each formed of a video associated with header data (ET2ᵢ) and with encoded video data (DV2ᵢ) representative of images, wherein, for each video stream (FVP1, FVPi, FVPn) of a set (E) of video streams, signalling information (INF) relating to settings is associated, the signalling information for a plurality of video streams from among the video streams of the set making it possible to determine whether the settings associated with the video streams of the plurality of video streams are identical or compatible in order for the video streams of the plurality of video streams to be used as second video stream (FV2), wherein the generation means (MG) are configured so as to:
- receive the signalling information (INF) for the video streams of said set,
- select the second video streams (FV2, FV2₁, FV2ᵢ, FV2ₙ) from among said set (E) of video streams on the basis of the signalling information (INF),
- retain the encoded video data (DV2₁, DV2ᵢ, DV2ₙ) representative of images of each of the videos of the set of second video streams (FV2) when generating the first video stream (FV1),
- generate a header (ET1) associated with said mosaic video (MV), said header being representative of an assembly of encoded video data (DV2₁, DV2ᵢ, DV2ₙ) representative of images of each of the videos of the set of second video streams (FV2, FV2₁, FV2ᵢ, FV2ₙ), and comprising:
- first header data (ET1₁) corresponding to the header data (ET2₁, ET2ᵢ, ET2ₙ) of each of the videos of the set of second video streams (FV2, FV2₁, FV2ᵢ, FV2ₙ),
- second header data (ET1₂) that are generated independently of the header data (ET2₁, ET2ᵢ, ET2ₙ) of each of the videos of the set of second video streams (FV2, FV2₁, FV2ᵢ, FV2ₙ),
- the mosaic video (MV) being generated from a tiled structure, in which the encoded video data (DV1₁, DV1ᵢ, DV1ₙ) representative of images associated with each tile of the mosaic video (MV) correspond, respectively, to the encoded video data (DV2₁, DV2ᵢ, DV2ₙ) representative of images associated with each video of the set of second video streams (FV2).
